# FASCICULE DE BREVET EUROPEEN

(11) **EP 4 634 561 B1**
(45) Date de publication et mention de la délivrance du brevet: **29.07.2026**
(21) Numéro de dépôt: 23814514.8
(22) Date de dépôt: 15.11.2023
(51) Int. Cl.: F16M 11/04, A47B 1/08, A47B 3/083, A47F 5/16, F16M 11/22, F16M 7/00, B65D 19/12, G01N 21/88

(54) **DISPOSITIF DE MAINTIEN ET/OU DE SUPPORT AJUSTABLE D'UN OBJET**
VORRICHTUNG ZUM VERSTELLBAREN HALTEN UND/ODER TRAGEN EINES GEGENSTANDES
DEVICE FOR THE ADJUSTABLE HOLDING AND/OR SUPPORT OF AN OBJECT

(30) Priorité: 12.12.2022 FR 2213199
(43) Date de publication de la demande: 22.10.2025
(73) Titulaire: Commissariat à l'Energie Atomique et aux Energies Alternatives, 75015 Paris (FR)
(72) Inventeur: SELWA, Olivier, 33600 PESSAC (FR)
(74) Mandataire: Santarelli
(86) Numéro de dépôt international: PCT/FR2023/051809
(87) Numéro de publication internationale: WO 2024/126910

(56) Documents cités:
- US-A- 1 568 758
- US-A- 4 332 366

## Description

### DOMAINE TECHNIQUE

De façon générale, la présente invention se rapporte au domaine des dispositifs de maintien et/ou de support d'objets.

L'invention peut par exemple s'appliquer au maintien d'éléments optiques dans le but d'effectuer des métrologies, notamment des métrologies d'endommagement laser, et plus spécifiquement des métrologies de type DMS (pour « Damage Mapping System » en anglais) avec éclairage par les tranches des éléments optiques.

Toutefois, l'invention n'est pas limitée à ce domaine technique. Elle peut encore être utilisée dans tout domaine technique où le maintien et/ou le support d'un objet est important, notamment pour le transport et le support d'objets, tels que des tableaux, des objets précieux, du mobilier, des objets de décoration, entre autres.

L'invention propose ainsi un dispositif de maintien et/ou de support d'un objet, ainsi qu'un ensemble comportant un tel dispositif et un tel objet.

### ÉTAT DE LA TECHNIQUE ANTÉRIEURE

US 4 332 366 A divulgue un dispositif avec les caractéristiques du préambule de la revendication 1.

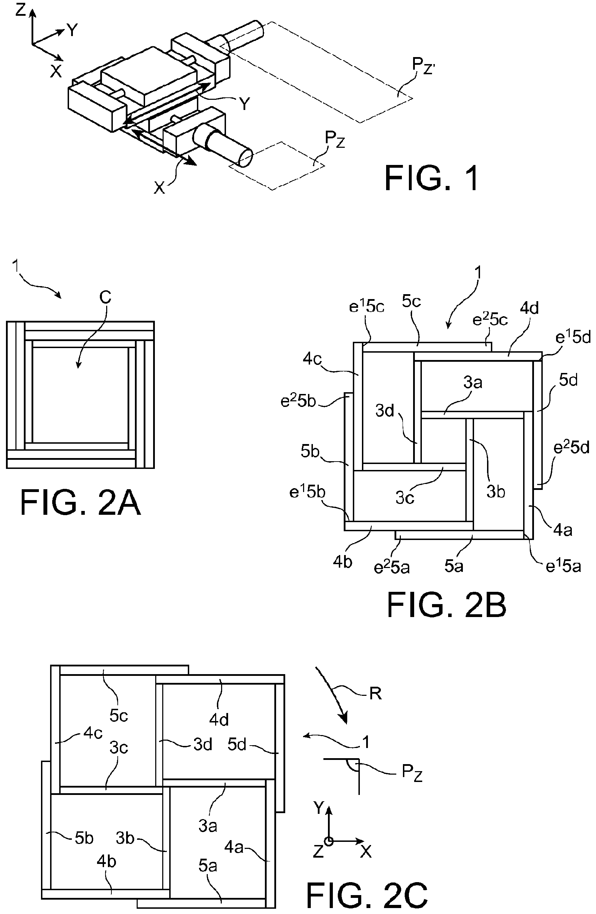

La figure 1 illustre en perspective un principe connu de déplacement croisé XY d'un objet, selon un premier axe horizontal X et un deuxième axe horizontal Y d'un repère tridimensionnel XYZ.

Pour réaliser un tel déplacement, il est nécessaire d'effectuer un déplacement linéaire en X par le biais d'un pilotage sur un plan Pz, perpendiculaire à l'axe Z, et un déplacement linéaire en Y, croisé à 90°, par le biais d'un pilotage sur un plan Pz', perpendiculaire à l'axe Z. Ce plan Pz' est distinct et parallèle au plan Pz.

Etant donné que généralement l'encombrement selon l'axe Z, soit l'encombrement en hauteur, n'est pas un facteur pénalisant, cette solution de l'art antérieur répond simplement et efficacement par des techniques éprouvées à la plupart des sollicitations de l'industrie en empilant les deux déplacements sur deux plans distincts en hauteur comme visible sur la figure 1. Ainsi, le déploiement d'un point en XY se fait sur le plan Pz' avec un pilotage du déplacement en X sur le plan Pz et un pilotage du déplacement en Y sur le plan Pz'.

Cependant, il s'avère que le pilotage de mouvements croisés à partir d'un même plan permettrait d'envisager d'autres applications dans d'autres types d'utilisations, par exemple de type rallonge en deux dimensions d'un objet quelconque.

Par ailleurs, dans le domaine de la métrologie d'endommagement laser, et particulièrement de la métrologie de type DMS, il est nécessaire de pouvoir maintenir un élément optique en vue d'effectuer sa métrologie ; il est actuellement nécessaire d'avoir un cadre adapté aux dimensions de chaque élément optique, à savoir sa longueur, sa largeur et son épaisseur.

Ainsi, plusieurs générations de cadres de maintien d'optiques ont vu le jour depuis plusieurs années et ils sont tous réalisés pour un seul dimensionnement d'élément optique.

Or, certaines installations laser utilisent de nombreux composants optiques dont les caractéristiques dimensionnelles sont très variables.

Il s'avère donc nécessaire de concevoir, fabriquer et stocker de nombreux cadres adaptés à chaque dimension permettant d'effectuer ces métrologies. Ces opérations présentent de nombreux inconvénients ; notamment en termes de temps de conception, de financement et d'espace de stockage. Il est à noter également qu'en cas d'absence de cadre adapté, la métrologie n'est pas envisageable.

Une solution a été proposée dans la demande de brevet français FR 3 092 382 A1 de la Demanderesse. Elle consiste en un dispositif comportant au moins quatre blocs de maintien venant respectivement au contact des quatre tranches d'un objet. Chaque bloc comporte une face interne au contact de l'objet, une face externe, et des première et deuxième faces latérales. Un système de guidage linéaire, comportant des rails de guidage sur chaque face interne et sur au moins l'une des faces latérales, permet de lier les blocs de maintien entre eux par le biais de liaisons glissières, ces rails de guidage étant de type mâle/femelle.

Le dispositif décrit permet donc de s'adapter à différentes tailles d'optiques, en longueur et en largeur, afin de les entourer pour permettre un éclairage par la tranche. Ce type d'adaptation est rendu possible par le biais de la mise en forme des quatre liaisons glissières encastrées les unes dans les autres entre côté interne et côté latéral.

Cette solution limite cependant le champ d'application au serrage d'un objet bidimensionnel et ne permet pas de répondre complètement aux besoins.

### EXPOSÉ DE L'INVENTION

L'invention a pour but de remédier au moins partiellement aux besoins mentionnés précédemment et aux inconvénients relatifs aux réalisations de l'art antérieur. L'invention a ainsi pour objet, selon l'un de ses aspects, un dispositif de maintien et/ou de support d'un objet, le dispositif étant ajustable par déplacement selon le premier axe et le deuxième axe dans un même plan perpendiculaire au troisième axe d'un repère tridimensionnel à trois axes, le dispositif comportant :
- quatre premiers blocs agencés entre eux de sorte à définir un espace de forme sensiblement parallélépipédique rectangle au centre du dispositif et comportant chacun une première extrémité reliée à l'un des quatre premiers blocs par le biais d'une liaison glissière de sorte que les quatre premiers blocs sont reliés entre eux deux à deux par le biais de liaisons glissières, chaque premier bloc comportant une face interne, une face externe, opposée à la face interne, une première face latérale et une deuxième face latérale, opposée à la première face latérale, chaque liaison glissière formée entre deux premiers blocs étant réalisée entre la face interne d'un des deux premiers blocs et l'une des première et deuxième faces latérales de l'autre des deux premiers blocs,
- quatre deuxièmes blocs, chaque deuxième bloc comportant une première extrémité solidarisée à une deuxième extrémité de chaque premier bloc, chaque deuxième bloc s'étendant depuis chaque deuxième extrémité de chaque premier bloc selon un même sens de rotation autour du centre du dispositif,
- quatre troisièmes blocs, chaque troisième bloc comportant une première extrémité solidarisée à une deuxième extrémité de chaque deuxième bloc, chaque troisième bloc s'étendant depuis chaque deuxième extrémité de chaque deuxième bloc selon un même sens de rotation autour du centre du dispositif, et une deuxième extrémité reliée à l'un des quatre deuxièmes blocs par le biais d'une liaison glissière de sorte que les quatre paires formées chacune d'un deuxième bloc et d'un troisième bloc sont reliées entre elles deux à deux par le biais de liaisons glissières,
les premiers, deuxièmes et troisièmes blocs étant contenus dans le même plan perpendiculaire au troisième axe et déplaçables selon le premier axe et le deuxième axe pour modifier l'encombrement du dispositif afin de permettre le maintien et/ou le support de l'objet.

Grâce à l'invention, il est possible de définir une conception mécanique avancée permettant les déplacements croisés de deux directions X et Y pilotés à partir d'un même plan en Z. De plus, il est possible de disposer d'un outillage permettant le maintien, le support et la sécurisation de tout objet.

Le dispositif selon l'invention peut en outre comporter l'une ou plusieurs des caractéristiques suivantes prises isolément ou suivant toutes combinaisons techniques possibles.

Les liaisons glissières, notamment celles établies entre deux premiers blocs et/ou celles établies entre les deuxièmes blocs et les troisièmes blocs, peuvent être de nombre, de morphologie, de taille et/ou de technologie différentes. En particulier, les liaisons glissières peuvent être en nombre variable entre deux blocs qu'elles relient entre eux. Les liaisons glissières utilisées peuvent être de tout type connu, étant éventuellement obtenues à partir d'éléments du commerce. Elles sont avantageusement solidarisées aux blocs, pouvant notamment être réalisées directement sur les blocs, étant par exemple d'un seul tenant, et/ou être rapportées sur les blocs.

Les liaisons glissières, en particulier celles établies entre deux premiers blocs et/ou celles établies entre les deuxièmes blocs et les troisièmes blocs, peuvent par exemple être de type queue d'aronde, en « L », en « T », en « boule », de type rails à billes et/ou de type cales en téflon, ou toute autre forme.

Les liaisons glissières établies entre les deuxièmes blocs et les troisièmes blocs peuvent encore comprendre l'imbrication d'un deuxième bloc dans un troisième bloc, ou inversement, notamment par le biais de formes coulissantes l'une dans l'autre, notamment cylindriques ou autres.

Les liaisons glissières établies entre les deuxièmes blocs et les troisièmes blocs peuvent également comprendre le coulissement des deuxièmes blocs par rapport aux troisièmes blocs dans des plans décalés l'une par rapport à l'autre.

En outre, les premiers blocs, les deuxièmes blocs et/ou les troisièmes blocs peuvent être de même taille, notamment de même longueur. Autrement dit, tous les premiers blocs peuvent être de même taille, notamment de même longueur. Tous les deuxièmes blocs peuvent être de même taille, notamment de même longueur. Tous les troisièmes blocs peuvent être de même taille, notamment de même longueur.

En variante, les premiers blocs, les deuxièmes blocs et/ou les troisièmes blocs peuvent être de tailles différentes, notamment de longueurs différentes. En particulier, deux premiers blocs, deux deuxièmes blocs et/ou deux troisièmes blocs, situés de façon opposée, en vis-à-vis, l'un par rapport à l'autre, peuvent être de même taille, notamment de même longueur. Toutefois, deux premiers blocs, deux deuxièmes blocs et/ou deux troisièmes blocs adjacents l'un à l'autre peuvent être de taille différente, notamment de longueur différente.

Par ailleurs, l'invention a encore pour objet, selon un autre de ses aspects, un ensemble, caractérisé en ce qu'il comporte :
- un dispositif tel que défini précédemment,
- un objet maintenu et/ou supporté par le dispositif.

L'ensemble peut par exemple comporter des roues pour permettre de déplacer le dispositif et/ou des pieds pour permettre de surélever le dispositif.

L'ensemble peut encore comporter des bras de support et/ou un plateau de support de l'objet.

L'ensemble peut en outre comporter des moyens de déplacement d'au moins une partie des deuxièmes blocs et/ou troisièmes blocs, notamment des vérins pneumatiques ou électriques.

Par ailleurs, l'ensemble peut comporter un cadre externe de dimension sensiblement égale à l'encombrement maximum du dispositif dans sa position dite de fermeture totale.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] illustre, selon une vue en perspective partielle, un principe mécanique selon l'art antérieur de déplacements croisés selon deux axes horizontaux X et Y dans des plans parallèles à l'axe vertical distincts,
[Fig. 2A], [Fig. 2B] et [Fig. 2C] illustrent, selon une vue du dessus, un exemple de dispositif conforme à l'invention, respectivement dans des positions dites d'ouverture totale, d'ouverture partielle et de fermeture totale,
[Fig. 3A], [Fig. 3B] et [Fig. 3C] illustrent, selon une vue du dessus, les quatre premiers blocs du dispositif des [Fig. 2A], [Fig. 2B] et [Fig. 2C], respectivement dans des positions dites d'ouverture totale, d'ouverture partielle et de fermeture totale,
[Fig. 4A], [Fig. 4B] et [Fig. 4C] illustrent, selon une vue du dessus, les quatre premiers blocs et les quatre deuxièmes blocs du dispositif des [Fig. 2A], [Fig. 2B] et [Fig. 2C], respectivement dans des positions dites d'ouverture totale, d'ouverture partielle et de fermeture totale,
[Fig. 5] illustre, selon une vue en perspective partielle, un exemple de liaison glissière pouvant être utilisée entre des blocs d'un dispositif conforme à l'invention,
[Fig. 6A] et [Fig. 6B] illustrent, selon une vue du dessus, un autre exemple de liaison glissière pouvant être utilisée entre des blocs d'un dispositif conforme à l'invention, respectivement dans des positions dites d'ouverture totale et d'ouverture partielle,
[Fig. 7A] et [Fig. 7B] illustrent, respectivement selon une vue en perspective et selon une vue du dessus, un autre exemple de liaison glissière pouvant être utilisée entre des blocs d'un dispositif conforme à l'invention, respectivement dans des positions d'ouverture partielle et d'ouverture totale,
[Fig. 8A] et [Fig. 8B] illustrent, selon une vue du dessus, des blocs de dimensions différentes d'un dispositif conforme à l'invention, respectivement dans des positions dites d'ouverture totale et d'ouverture partielle,
[Fig. 9A] et [Fig. 9B] illustrent, selon une vue en perspective, un principe d'utilisation d'un dispositif conforme à l'invention pour le support d'un objet, respectivement dans des positions dites d'ouverture totale et de fermeture totale,
[Fig. 10A], [Fig. 10B], [Fig. 10C] et [Fig. 10D] illustrent, selon une vue en perspective, un autre principe d'utilisation d'un dispositif conforme à l'invention pour le support d'un objet, dans des positions d'ouverture totale, d'ouverture partielle et de fermeture totale,
[Fig. 11A], [Fig. 11B], [Fig. 11C] et [Fig. 11D] illustrent, selon une vue perspective, encore un autre principe d'utilisation d'un dispositif conforme à l'invention pour le support d'un objet, dans des positions d'ouverture totale, d'ouverture partielle et de fermeture totale,
[Fig. 12A], [Fig. 12B] et [Fig. 12C] illustrent, selon une vue en perspective, encore un autre principe d'utilisation d'un dispositif conforme à l'invention pour le support d'un objet, dans des positions d'ouverture totale, d'ouverture partielle et de fermeture totale,
[Fig. 13A] et [Fig. 13B] illustrent, selon une vue en perspective, encore un autre principe d'utilisation d'un dispositif conforme à l'invention pour le support d'un objet, dans des positions d'ouverture totale et de fermeture totale, et
[Fig. 14A] et [Fig. 14B] illustrent, selon une vue en perspective, encore un autre principe d'utilisation d'un dispositif conforme à l'invention pour le support d'un objet, dans des positions d'ouverture totale et de fermeture totale.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La figure 1 a déjà été décrite dans la partie relative à l'art antérieur et au contexte technique de l'invention.

En référence aux figures 2A à 4C, un dispositif 1 conforme à l'invention est décrit.

Il est à noter que le dispositif 1 conforme à l'invention peut avantageusement permettre le maintien d'un objet, notamment de forme sensiblement parallélépipédique rectangle, et le support d'un objet 2 de tout type, comme il sera décrit par la suite.

Le dispositif 1 conforme à l'invention peut tout particulièrement, mais non exclusivement, être adapté pour la réalisation de métrologies d'endommagement laser, et plus spécifiquement de métrologies de type DMS, avec éclairage par les tranches d'objets sous forme d'éléments optiques. En effet, le dispositif 1 conforme à l'invention permet de disposer d'un cadre unique assurant le maintien de n'importe quel élément optique dont les dimensions sont compatibles avec les dimensions maximales prévues pour le dispositif 1.

Les figures 2A, 2B et 2C représentent le dispositif 1 conforme à l'invention, respectivement dans des positions dites d'ouverture totale, d'ouverture partielle et de fermeture totale.

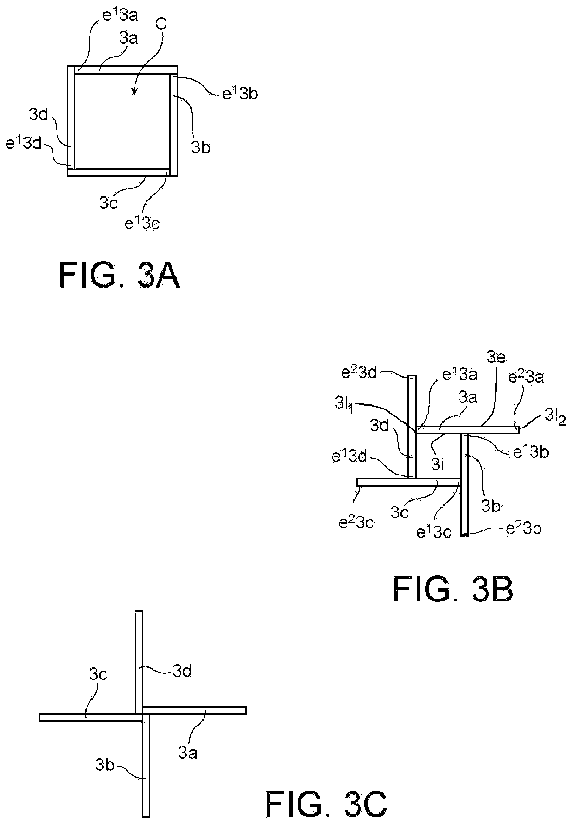

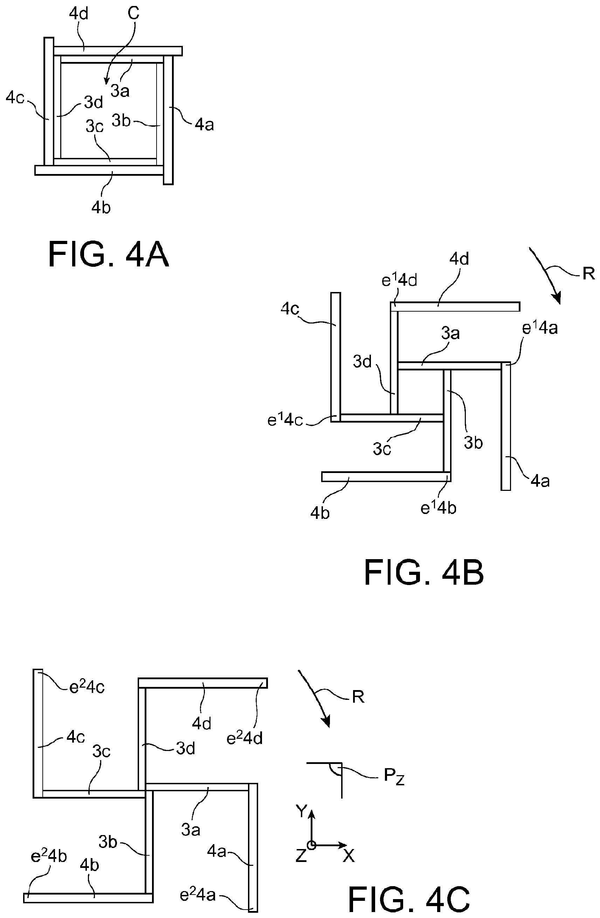

Les figures 3A, 3B et 3C représentent les quatre premiers blocs 3a, 3b, 3c et 3d du dispositif 1, respectivement dans les positions des figures 2A, 2B et 2C, et les figures 4A, 4B et 4C représentent les quatre premiers blocs 3a, 3b, 3c et 3d et les quatre deuxièmes blocs 4a, 4b, 4c et 4d, respectivement dans les positions des figures 2A, 2B et 2C.

Le dispositif 1 présente une forte rigidité et s'apparente à un diaphragme parallélépipédique accompagné d'une forme parallélépipédique extensible dans les deux directions X et Y. Lorsque l'un augmente, l'autre diminue.

Ainsi, le dispositif 1 est ajustable par déplacement selon le premier axe X et le deuxième axe Y dans un même plan P_{Z} perpendiculaire au troisième axe Z du repère tridimensionnel à trois axes X, Y, Z.

En se référant tout d'abord aux figures 3A, 3B et 3C, le dispositif 1 comporte quatre premiers blocs rectilignes 3a, 3b, 3c, 3d qui sont agencés entre eux de sorte à définir un espace de forme sensiblement parallélépipédique rectangle au centre C du dispositif 1. A noter que cet espace C n'est pas visible dans la position dite de fermeture totale de la figure 3C.

Comme visible notamment sur la figure 3B, chaque premier bloc 3a, 3b, 3c, 3d comporte une première extrémité e1₃ₐ, e1_{3b}, e1_{3c}, e1_{3d} qui est reliée à l'un des quatre premiers blocs 3a, 3b, 3c, 3d par le biais d'une liaison glissière. De cette façon, les quatre premiers blocs 3a, 3b, 3c, 3d sont reliés entre eux deux à deux par le biais de liaisons glissières.

En particulier, chaque premier bloc 3a, 3b, 3c, 3d comporte une face interne 3i, une face externe 3e, opposée à la face interne 3i, une première face latérale 3l₁ et une deuxième face latérale 3l₂, opposée à la première face latérale 3l₁. Chaque liaison glissière formée entre deux premiers blocs 3a, 3b, 3c, 3d est réalisée entre la face interne 3i d'un des deux premiers blocs et l'une des première 3l₁ et deuxième 3l₂ faces latérales de l'autre des deux premiers blocs. Par exemple, la liaison glissière réalisée entre le bloc 3a et le bloc 3b est réalisée entre la face interne 3i du bloc 3a et la première face latérale 3l₁ du bloc 3b. Les liaisons glissières sont assurées directement sur les blocs avec des formes quelconques, par exemple formes en « T », en « L », en boule, et/ou par ajout de pièces du commerce, par exemple de type rails à billes. Les liaisons glissières peuvent consister en l'imbrication de liaisons glissières de type mâle-femelle ou femelle-mâle entre les faces internes 3i et les faces latérales 3l₁, 3l₂.

Par ailleurs, comme visible notamment sur les figures 4A, 4B et 4C, le dispositif 1 comporte encore quatre deuxièmes blocs 4a, 4b, 4c, 4d. Chaque deuxième bloc 4a, 4b, 4c, 4d comporte une première extrémité e1₄ₐ, e1_{4b}, e1_{4c}, e1_{4d} solidarisée à une deuxième extrémité e2₃ₐ, e2_{3b}, e2_{3c}, e2_{3d} de chaque premier bloc 3a, 3b, 3c, 3d.

De plus, chaque deuxième bloc 4a, 4b, 4c, 4d s'étend depuis chaque deuxième extrémité e2₃ₐ, e2_{3b}, e2_{3c}, e2_{3d} de chaque premier bloc 3a, 3b, 3c, 3d selon un même sens de rotation R autour du centre C du dispositif 1, comme visible notamment sur la figure 4C. En outre, comme visible sur les figures 2A, 2B et 2C, le dispositif 1 comporte quatre troisièmes blocs 5a, 5b, 5c, 5d. Chaque troisième bloc 5a, 5b, 5c, 5d comporte une première extrémité e1₅ₐ, e1_{5b}, e1_{5c}, e1_{5d} solidarisée à une deuxième extrémité e2₄ₐ, e2_{4b}, e2_{4c}, e2_{4d} de chaque deuxième bloc 4a, 4b, 4c, 4d.

Chaque troisième bloc 5a, 5b, 5c, 5d s'étend depuis chaque deuxième extrémité e2₄ₐ, e2_{4b}, e2_{4c}, e2_{4d} de chaque deuxième bloc 4a, 4b, 4c, 4d selon un même sens de rotation R autour du centre C du dispositif 1, comme notamment visible sur la figure 2C.

De plus, chaque troisième bloc 5a, 5b, 5c, 5d comporte une deuxième extrémité e2₅ₐ, e2_{5b}, e2_{5c}, e2_{5d} reliée à l'un des quatre deuxièmes blocs 4a, 4b, 4c, 4d par le biais d'une liaison glissière de sorte que les quatre paires formées chacune d'un deuxième bloc 4a, 4b, 4c, 4d et d'un troisième bloc 5a, 5b, 5c, 5d sont reliées entre elles deux à deux par le biais de liaisons glissières.

Les liaisons glissières sont en particulier assurées par des combinaisons mâle-femelle ou femelle-mâle. Le nombre et la forme peuvent être définis par l'utilisateur. Elles peuvent comporter des éléments du commerce, tels que des cales en téflon ou des rails à billes, solidarisés sur l'une ou l'autre, ou les deux, séries de blocs 4a, 4b, 4c, 4d et 5a, 5b, 5c, 5d. Plus précisément, il apparaît donc que le premier bloc 3a comporte une première extrémité e1₃ₐ et une deuxième extrémité e2₃ₐ. La première extrémité e1₃ₐ est reliée au corps du premier bloc 3d par le biais d'une liaison glissière entre face interne et face latérale. De même, le premier bloc 3b comporte une première extrémité e1_{3b} et une deuxième extrémité e2_{3b}. La première extrémité e1_{ab} est reliée au corps du premier bloc 3a par le biais d'une liaison glissière entre face interne et face latérale. De même encore, le premier bloc 3c comporte une première extrémité e1_{3c} et une deuxième extrémité e2_{3c}. La première extrémité e1_{3c} est reliée au corps du premier bloc 3b par le biais d'une liaison glissière entre face interne et face latérale. De même encore, le premier bloc 3d comporte une première extrémité e1_{3d} et une deuxième extrémité e2_{3d}. La première extrémité e1_{3d} est reliée au corps du premier bloc 3c par le biais d'une liaison glissière entre face interne et face latérale.

En outre, le deuxième bloc 4a comporte une première extrémité e1₄ₐ et une deuxième extrémité e2₄ₐ. La première extrémité e1₄ₐ est fixée à la deuxième extrémité e2₃ₐ du premier bloc 3a. De même, le deuxième bloc 4b comporte une première extrémité e1_{4b} et une deuxième extrémité e2_{4b}. La première extrémité e1_{4b} est fixée à la deuxième extrémité e2_{3b} du premier bloc 3b. De même encore, le deuxième bloc 4c comporte une première extrémité e1_{4c} et une deuxième extrémité e2_{4c}. La première extrémité e1_{4c} est fixée à la deuxième extrémité e2_{3c} du premier bloc 3c. De même encore, le deuxième bloc 4d comporte une première extrémité e1_{4d} et une deuxième extrémité e2_{4d}. La première extrémité e1_{4d} est fixée à la deuxième extrémité e2_{3d} du premier bloc 3d.

La présence des quatre deuxièmes blocs 4a, 4b, 4c, 4d permet d'ajouter de la rigidité au dispositif 1 et d'augmenter la surface de portée de celui-ci.

Par ailleurs, le troisième bloc 5a comporte une première extrémité e1₅ₐ fixée à la deuxième extrémité e2₄ₐ du deuxième bloc 4a. De même, le troisième bloc 5b comporte une première extrémité e1_{5b} fixée à la deuxième extrémité e2_{4b} du deuxième bloc 4b. De même encore, le troisième bloc 5c comporte une première extrémité e1_{5c} fixée à la deuxième extrémité e2_{4c} du deuxième bloc 4c. De même encore, le troisième bloc 5d comporte une première extrémité e1_{5d} fixée à la deuxième extrémité e2_{4d} du deuxième bloc 4d.

De plus, le troisième bloc 5a est relié de sa première extrémité e1₅ₐ jusqu'à sa deuxième extrémité e2₅ₐ au corps du deuxième bloc 4b par le biais d'une liaison glissière. Cette liaison glissière pourra être de type femelle-mâle ou mâle-femelle, en décalé ou en imbrication l'un dans l'autre. Le nombre, la taille et la forme des liaisons peuvent variés et peuvent être créés par l'ajout d'objets du commerce. De même, le troisième bloc 5b est relié de sa première extrémité e1_{5b} jusqu'à sa deuxième extrémité e2_{5b} au corps du deuxième bloc 4c par le biais d'une liaison glissière. Cette liaison glissière pourra être de type femelle-mâle ou mâle-femelle, en décalé ou en imbrication l'un dans l'autre. Le nombre, la taille et la forme des liaisons peuvent variés et peuvent être créés par l'ajout d'objets du commerce.

De même encore, le troisième bloc 5c est relié de sa première extrémité e1_{5c} jusqu'à sa deuxième extrémité e2_{5c} au corps du deuxième bloc 4d par le biais d'une liaison glissière. Cette liaison glissière pourra être de type femelle-mâle ou mâle-femelle, en décalé ou en imbrication l'un dans l'autre. Le nombre, la taille et la forme des liaisons peuvent variés et peuvent être créés par l'ajout d'objets du commerce.

De même encore, le troisième bloc 5d est relié de sa première extrémité e1_{5d} jusqu'à sa deuxième extrémité e2_{5d} au corps du deuxième bloc 4a par le biais d'une liaison glissière. Cette liaison glissière pourra être de type femelle-mâle ou mâle-femelle, en décalé ou en imbrication l'un dans l'autre. Le nombre, la taille et la forme des liaisons peuvent variés et peuvent être créés par l'ajout d'objets du commerce.

La présence des troisièmes blocs 5a, 5b, 5c, 5d permet de rigidifier le dispositif 1 tout en formant un cadre externe pour celui-ci.

Ainsi, les premiers 3a, 3b, 3c, 3d, deuxièmes 4a, 4b, 4c, 4d et troisièmes 5a, 5b, 5c, 5d blocs sont contenus dans le même plan Pz perpendiculaire au troisième axe Z et déplaçables selon le premier axe X et le deuxième axe Y pour modifier l'encombrement du dispositif 1 afin de permettre le maintien et/ou le support de l'objet 2.

Afin de réaliser les liaisons glissières entre les deuxièmes blocs 4a, 4b, 4c, 4d et les troisièmes blocs 5a, 5b, 5c, 5d, tout type de technique est possible. Elles peuvent ainsi être créées avec des nombres et types différentes selon les applications envisagées. Il est même possible de décaler les plans entre eux selon les utilisations souhaitées et d'utiliser des éléments du commerce pour créer ces liaisons.

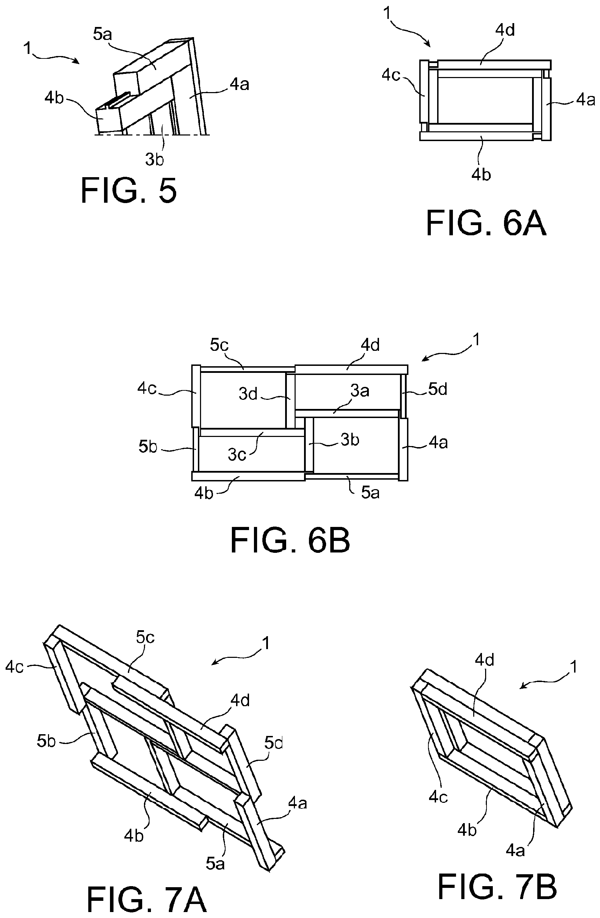

Ainsi, la figure 5 illustre par exemple la possibilité d'avoir une liaison glissière de type queue d'aronde, sur un même plan à l'extérieur.

Les figures 6A et 6B illustrent la possibilité d'avoir des liaisons glissières consistant en l'imbrication d'un deuxième bloc 4a, 4b, 4c, 4d dans un troisième bloc 5a, 5b, 5c, 5d, ou inversement, par le biais de formes cylindriques coulissantes l'une dans l'autre ou d'autres formes, et cela sur un même plan.

Enfin, les figures 7A et 7B illustrent la possibilité d'avoir des liaisons glissières entre les deuxièmes blocs 4a, 4b, 4c, 4d et les troisièmes blocs 5a, 5b, 5c, 5d réalisées par coulissement des deuxièmes blocs 4a, 4b, 4c, 4d par rapport aux troisièmes blocs 5a, 5b, 5c, 5d, par le biais de rails de coulissement, dans des plans décalés l'une par rapport à l'autre, comme visible sur la figure 7A.

Il faut par ailleurs noter que la dimension, notamment la longueur, des premiers blocs 3a, 3b, 3c, 3d n'est pas nécessairement identique.

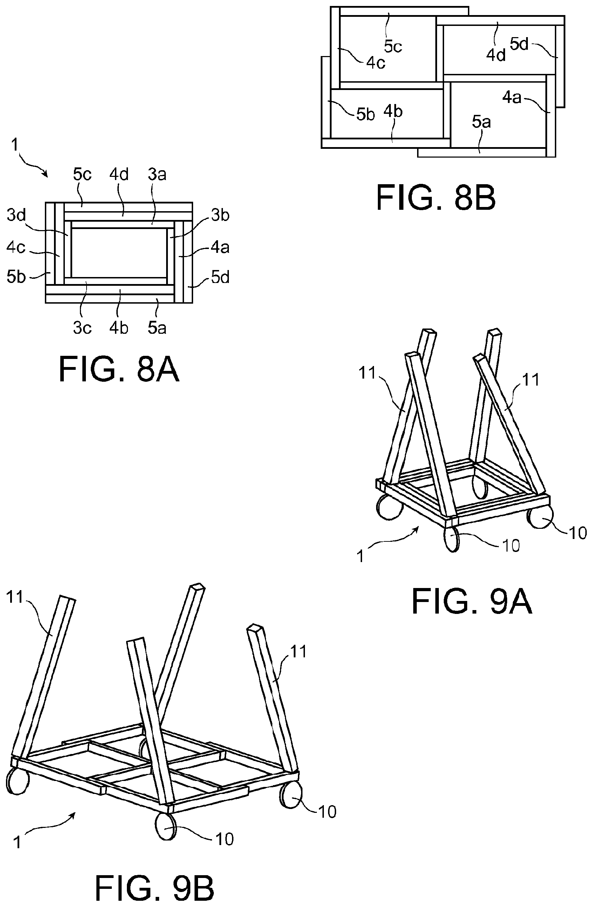

En particulier, les figures 8A et 8B illustrent un dispositif 1 conforme à l'invention dans lequel les tailles des premiers 3a, 3b, 3c, 3d, deuxièmes 4a, 4b, 4c, 4d et troisièmes 5a, 5b, 5c, 5d blocs sont différentes.

Avantageusement, les tailles, notamment les longueurs, des blocs sont identiques deux à deux, à savoir identiques pour deux blocs opposés l'un à l'autre.

Ainsi, le dispositif 1 conforme à l'invention permet d'obtenir un nouveau concept reposant sur deux structures : celle formée par les premiers blocs 3a, 3b, 3c, 3d et celle formée par les deuxièmes 4a, 4b, 4c, 4d et troisièmes 5a, 5b, 5c, 5d blocs.

Ces deux structures sont avantageusement de forme parallélépipédique et imbriquées l'une dans l'autre par des liaisons glissières. En effet, une mise en mouvement est rendue possible par le biais de huit liaisons glissières permettant d'étendre la taille des formes parallélépipédiques formées dans les deux directions X et Y orientées à 90° l'une de l'autre.

Les deux structures voient leurs caractéristiques de longueur et de largeur modifiées lors des déplacements du dispositif 1. La modification de la première structure entraîne la modification de la deuxième structure. De plus, lorsque la première structure diminue, la deuxième structure augmente, s'apparentant ainsi à une rallonge en deux directions X et Y du dispositif 1.

Les figures 9A à 14B permettent d'illustrer différentes applications d'un dispositif 1 conforme à l'invention.

En effet, les applications de type extension de structure suivant deux directions X et Y perpendiculaires sont nombreuses. Il peut s'agir de la formation de palettes, de chariots, de tables, de porte-bateaux, etc. De même, il peut s'agir d'accessoires de type poignée, plateau, roue, etc., pour faciliter la mise en œuvre d'outillages notamment.

Les figures 9A et 9B illustrent par exemple la possibilité d'avoir un ensemble dans lequel des roues 10 sont placées d'un côté du dispositif 1 et des bras de support 11 sont placés de l'autre côté du dispositif 1 pour former un porte-bateaux réglable en deux dimensions. A noter que l'utilisation de poteaux rétractables permettrait un réglage en trois dimensions.

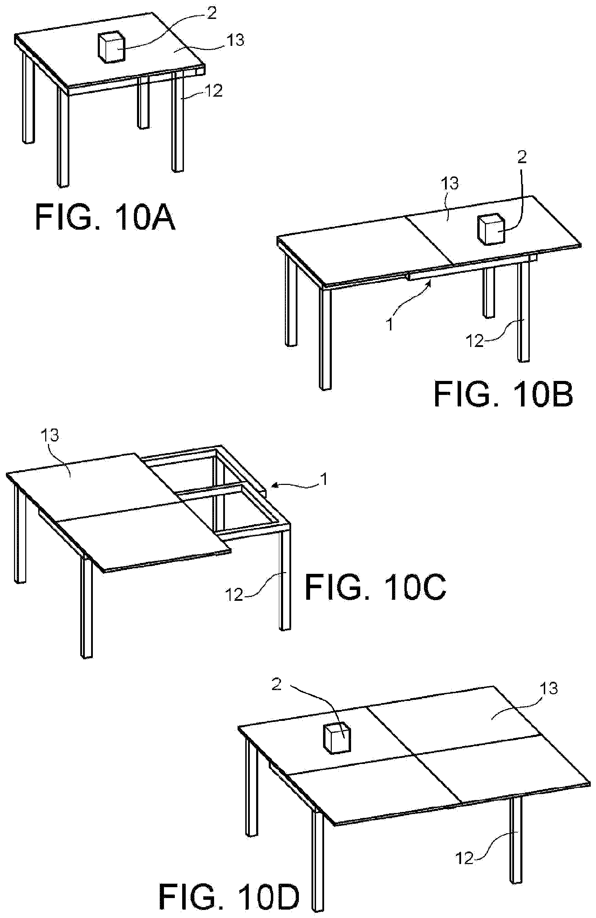

Par ailleurs, les figures 10A à 10D illustrent la possibilité d'avoir des roues 10 sur le dispositif 1 et un plateau de support 13 d'un objet 2.

Avantageusement, ce plateau de support 13, réalisé notamment en quatre parties, est dépliable de sorte à pouvoir s'adapter à l'encombrement du dispositif 1 et ainsi former une table extensible pour l'objet 2.

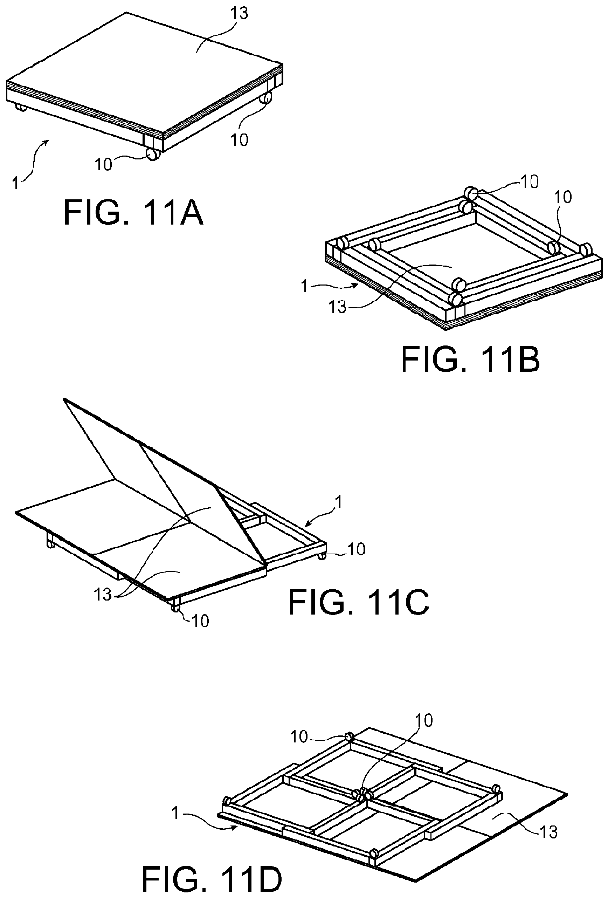

Par ailleurs, les figures 11A à 11D illustrent la possibilité de former un chariot extensible selon les deux directions X et Y avec l'ajout de roues 10 et d'un plateau de support pliable 13 en quatre parties.

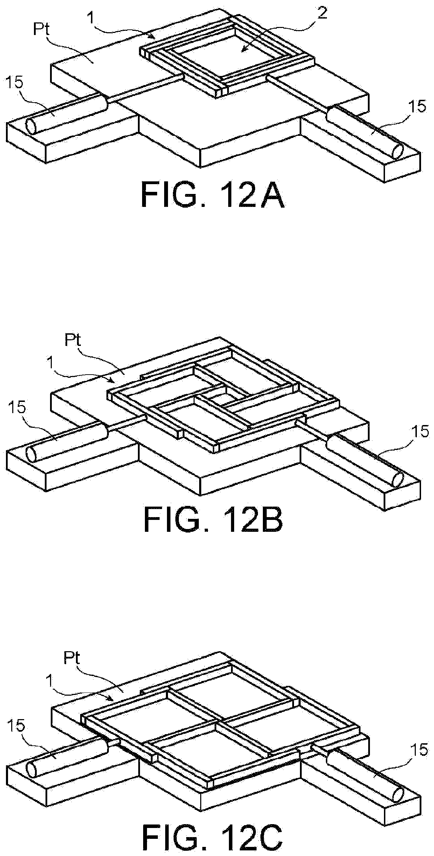

Le dispositif 1 conforme à l'invention permet également d'envisager des applications de type déplacement d'un point en deux dimensions piloté par un même plan de sorte à permettre par exemple le compactage d'un objet 2 en deux directions simultanées. Ainsi, les figures 12A à 12C illustrent par exemple le pilotage d'un outillage par deux vérins 15 en X et Y avec un outillage fixé sur un plan de travail Pt. Chaque vérin 15 pilote le déplacement d'un troisième bloc et ainsi le déplacement global du dispositif 1.

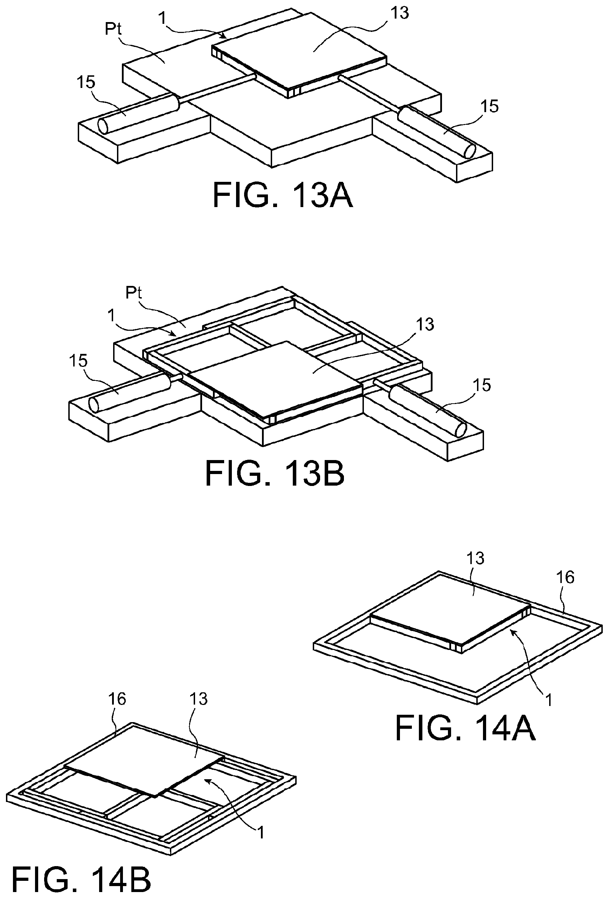

Les figures 13A et 13B illustrent en outre la possibilité d'ajouter un plateau de support 13 à l'ensemble des figures 12A à 12C

Par ailleurs, les figures 14A et 14B illustrent le fait d'avoir un cadre externe 16 de dimension sensiblement égale à l'encombrement maximum du dispositif 1 dans sa position dite de fermeture totale. Le pilotage du déploiement du dispositif 1 peut ainsi être réalisé avec le cadre externe 16 servant de guide au déploiement.

Bien entendu, l'invention n'est pas limitée aux exemples de réalisation qui viennent d'être décrits. Diverses modifications peuvent y être apportées par l'homme du métier, notamment pour prendre en compte des contraintes dimensionnelles et/ou géométriques différentes.

## Revendications

1. Dispositif (1) de maintien et/ou de support d'un objet (2), le dispositif (1) étant ajustable par déplacement selon le premier axe (X) et le deuxième axe (Y) dans un même plan (P_{Z}) perpendiculaire au troisième axe (Z) d'un repère tridimensionnel à trois axes (X, Y, Z), le dispositif (1) comportant :
- quatre premiers blocs (3a, 3b, 3c, 3d) agencés entre eux de sorte à définir un espace de forme sensiblement parallélépipédique rectangle au centre (C) du dispositif (1) et comportant chacun une première extrémité (e1₃ₐ, e1_{3b}, e1_{3c}, e1_{3d}) reliée à l'un des quatre premiers blocs (3a, 3b, 3c, 3d) par le biais d'une liaison glissière de sorte que les quatre premiers blocs (3a, 3b, 3c, 3d) sont reliés entre eux deux à deux par le biais de liaisons glissières, chaque premier bloc (3a, 3b, 3c, 3d) comportant une face interne (3i), une face externe (3e), opposée à la face interne (3i), une première face latérale (3l₁) et une deuxième face latérale (3l₂), opposée à la première face latérale (3l₁), chaque liaison glissière formée entre deux premiers blocs (3a, 3b, 3c, 3d) étant réalisée entre la face interne (3i) d'un des deux premiers blocs et l'une des première (3l₁) et deuxième (3l₂) faces latérales de l'autre des deux premiers blocs, caractérisé en que le dispositif comprend:
- quatre deuxièmes blocs (4a, 4b, 4c, 4d), chaque deuxième bloc (4a, 4b, 4c, 4d) comportant une première extrémité (e1₄ₐ, e1_{4b}, e1_{4c}, e1_{4d}) solidarisée à une deuxième extrémité (e2₃ₐ, e2_{3b}, e2_{3c}, e2_{3d}) de chaque premier bloc (3a, 3b, 3c, 3d), chaque deuxième bloc (4a, 4b, 4c, 4d) s'étendant depuis chaque deuxième extrémité (e2₃ₐ, e2_{3b}, e2_{3c}, e2_{3d}) de chaque premier bloc (3a, 3b, 3c, 3d) selon un même sens de rotation (R) autour du centre (C) du dispositif (1),
- quatre troisièmes blocs (5a, 5b, 5c, 5d), chaque troisième bloc (5a, 5b, 5c, 5d) comportant une première extrémité (e1₅ₐ, e1_{5b}, e1_{5c}, e1_{5d}) solidarisée à une deuxième extrémité (e2₄ₐ, e2_{4b}, e2_{4c}, e2_{4d}) de chaque deuxième bloc (4a, 4b, 4c, 4d), chaque troisième bloc (5a, 5b, 5c, 5d) s'étendant depuis chaque deuxième extrémité (e2₄ₐ, e2_{4b}, e2_{4c}, e2_{4d}) de chaque deuxième bloc (4a, 4b, 4c, 4d) selon un même sens de rotation (R) autour du centre (C) du dispositif (1), et une deuxième extrémité (e2₅ₐ, e2_{5b}, e2_{5c}, e2_{5d}) reliée à l'un des quatre deuxièmes blocs (4a, 4b, 4c, 4d) par le biais d'une liaison glissière de sorte que les quatre paires formées chacune d'un deuxième bloc (4a, 4b, 4c, 4d) et d'un troisième bloc (5a, 5b, 5c, 5d) sont reliées entre elles deux à deux par le biais de liaisons glissières,
les premiers (3a, 3b, 3c, 3d), deuxièmes (4a, 4b, 4c, 4d) et troisièmes (5a, 5b, 5c, 5d) blocs étant contenus dans le même plan (P_{Z}) perpendiculaire au troisième axe (Z) et déplaçables selon le premier axe (X) et le deuxième axe (Y) pour modifier l'encombrement du dispositif (1) afin de permettre le maintien et/ou le support de l'objet (2).

2. Dispositif selon la revendication 1, **caractérisé en ce que** les liaisons glissières, notamment celles établies entre deux premiers blocs (3a, 3b, 3c, 3d) et/ou celles établies entre les deuxièmes blocs (4a, 4b, 4c, 4d) et les troisièmes blocs (5a, 5b, 5c, 5d), sont de type queue d'aronde, en « L », en « T », en « boule », de type rails à billes et/ou de type cales en téflon.

3. Dispositif selon la revendication 1 ou 2, **caractérisé en ce que** les liaisons glissières, notamment celles établies entre deux premiers blocs (3a, 3b, 3c, 3d) et/ou celles établies entre les deuxièmes blocs (4a, 4b, 4c, 4d) et les troisièmes blocs (5a, 5b, 5c, 5d), sont de nombre différent, les liaisons glissières étant notamment en nombre variable entre deux blocs qu'elles relient entre eux.

4. Dispositif selon la revendication 1 ou 2, **caractérisé en ce que** les liaisons glissières établies entre les deuxièmes blocs (4a, 4b, 4c, 4d) et les troisièmes blocs (5a, 5b, 5c, 5d) comprennent l'imbrication d'un deuxième bloc (4a, 4b, 4c, 4d) dans un troisième bloc (5a, 5b, 5c, 5d), ou inversement, notamment par le biais de formes coulissantes l'une dans l'autre, notamment cylindriques.

5. Dispositif selon la revendication 1 ou 2, **caractérisé en ce que** les liaisons glissières établies entre les deuxièmes blocs (4a, 4b, 4c, 4d) et les troisièmes blocs (5a, 5b, 5c, 5d) comprennent le coulissement des deuxièmes blocs (4a, 4b, 4c, 4d) par rapport aux troisièmes blocs (5a, 5b, 5c, 5d) dans des plans décalés l'une par rapport à l'autre.

6. Dispositif selon l'une quelconque des revendications précédentes, **caractérisé en ce que** les premiers blocs (3a, 3b, 3c, 3d), les deuxièmes blocs (4a, 4b, 4c) et/ou les troisièmes blocs (5a, 5b, 5c, 5d) sont de même taille, notamment de même longueur.

7. Dispositif selon l'une quelconque des revendications 1 à 5, **caractérisé en ce que** les premiers blocs (3a, 3b, 3c, 3d), les deuxièmes blocs (4a, 4b, 4c) et/ou les troisièmes blocs (5a, 5b, 5c, 5d) sont de tailles différentes, notamment de longueurs différentes.

8. Dispositif selon la revendication 7, **caractérisé en ce que** deux premiers blocs (3a, 3b, 3c, 3d), deux deuxièmes blocs (4a, 4b, 4c, 4d) et/ou deux troisièmes blocs (5a, 5b, 5c, 5d), situés de façon opposée, en vis-à-vis, l'un par rapport à l'autre, sont de même taille, notamment de même longueur.

9. Ensemble, **caractérisé en ce qu'**il comporte :
- un dispositif (1) selon l'une quelconque des revendications précédentes,
- un objet (2) maintenu et/ou supporté par le dispositif (1).

10. Ensemble selon la revendication 9, **caractérisé en ce qu'**il comporte des roues (10) pour permettre de déplacer le dispositif (1) et/ou des pieds (12) pour permettre de surélever le dispositif (1).

11. Ensemble selon la revendication 9 ou 10, **caractérisé en ce qu'**il comporte des bras de support (11) et/ou un plateau de support (13) de l'objet (2).

12. Ensemble selon l'une des revendications 9 à 11, **caractérisé en ce qu'**il comporte des moyens de déplacement (15) d'au moins une partie des deuxièmes blocs (4a, 4b, 4c, 4d) et/ou troisièmes blocs (5a, 5b, 5c, 5d), notamment des vérins pneumatiques ou électriques.

13. Ensemble selon l'une quelconque des revendications 9 à 12, **caractérisé en ce qu'**il comporte un cadre externe (16) de dimension sensiblement égale à l'encombrement maximum du dispositif (1) dans sa position dite de fermeture totale.

## Patentansprüche

1. Vorrichtung (1) zum Halten und/oder Stützen eines Objekts (2), wobei die Vorrichtung (1) durch Verschieben entlang der ersten Achse (X) **und der zweiten Achse (Y) in derselben Ebene (Pz), die senkrecht zur dritten Achse (Z) eines dreidimensionalen Koordinatensystems mit drei Achsen (X, Y, Z) liegt, einstellbar ist,** wobei die Vorrichtung (1) Folgendes aufweist:
- vier erste Blöcke (3a, 3b, 3c, 3d), die untereinander so angeordnet sind, dass sie einen im Wesentlichen rechteckigen, parallelepipedförmigen Raum in der Mitte (C) der Vorrichtung (1) definieren und jeweils ein erstes Ende (e1₃ₐ, e1_{3b}, e1_{3c}, e1_{3d}) aufweisen, das mit einem der ersten vier Blöcke (3a, 3b, 3c, 3d) über eine Gleitverbindung verbunden ist, so dass die ersten vier Blöcke (3a, 3b, 3c, 3d) über Gleitverbindungen paarweise miteinander verbunden sind, wobei jeder erste Block (3a, 3b, 3c, 3d) eine Innenfläche (3i), eine Außenfläche (3e), gegenüber der Innenfläche (3i), eine erste Seitenfläche (3l₁) und eine zweite Seitenfläche (3l₂), gegenüber der ersten Seitenfläche (3l₁), aufweist, wobei jede Gleitverbindung, die zwischen zwei ersten Blöcken (3a, 3b, 3c, 3d) ausgebildet ist, zwischen der Innenfläche (3i) eines der beiden ersten Blöcke und einer der ersten (3l₁) und der zweiten (3l₂) Seitenfläche des anderen der beiden ersten Blöcke hergestellt wird, **dadurch gekennzeichnet, dass** die Vorrichtung Folgendes umfasst:
- vier zweite Blöcke (4a, 4b, 4c, 4d), wobei jeder zweite Block (4a, 4b, 4c, 4d) ein erstes Ende (e1₄ₐ, e1_{4b}, e1_{4c}, e1_{4d}) aufweist, das mit einem zweiten Ende (e2₃ₐ, e2_{3b}, e2_{3c}, e2_{3d}) jedes ersten Blocks (3a, 3b, 3c, 3d) verbunden ist, wobei sich jeder zweite Block (4a, 4b, 4c, 4d) von jedem zweiten Ende (e2₃ₐ, e2_{3b}, e2_{3c}, e2_{3d}) jedes ersten Blocks (3a, 3b, 3c, 3d) in derselben Drehrichtung (R) um die Mitte (C) der Vorrichtung (1) erstreckt,
- vier dritte Blöcke (5a, 5b, 5c, 5d), wobei jeder dritte Block (5a, 5b, 5c, 5d) ein erstes Ende (e1₅ₐ, e1_{5b}, e1_{5c}, e1_{5d}) aufweist, das mit einem zweiten Ende (e2₄ₐ, e2_{4b}, e2_{4c}, e2_{4d}) jedes zweiten Blocks (4a, 4b, 4c, 4d) verbunden ist, wobei sich jeder dritte Block (5a, 5b, 5c, 5d) von jedem zweiten Ende (e2₄ₐ, e2_{4b}, e2_{4c}, e2_{4d}) jedes zweiten Blocks (4a, 4b, 4c, 4d) in derselben Drehrichtung (R) um die Mitte (C) der Vorrichtung (1) erstreckt, und ein zweites Ende (e2₅ₐ, e2_{5b}, e2_{5c}, e2_{5d}), das mit einem der vier zweiten Blöcke (4a, 4b, 4c, 4d) über eine Gleitverbindung verbunden ist, so dass die vier Paare, die jeweils aus einem zweiten Block (4a, 4b, 4c, 4d) und einem dritten Block (5a, 5b, 5c, 5d) ausgebildet sind, über Gleitverbindungen paarweise miteinander verbunden sind,
wobei die ersten (3a, 3b, 3c, 3d), zweiten (4a, 4b, 4c, 4d) und dritten (5a, 5b, 5c, 5d) Blöcke, die in derselben Ebene (Pz) senkrecht zur dritten Achse (Z) enthalten sind und entlang der ersten Achse (X) und der zweiten Achse (Y) verschiebbar sind, um den Platzbedarf der Vorrichtung (1) zu ändern, um das Halten und/oder Stützen des Objekts (2) zu ermöglichen.

2. Vorrichtung nach Anspruch 1, **dadurch gekennzeichnet, dass** die Gleitverbindungen, insbesondere diejenigen, die zwischen zwei ersten Blöcken (3a, 3b, 3c, 3d) und/oder diejenigen zwischen den zweiten Blöcken (4a, 4b, 4c, 4d) und den dritten Blöcken (5a, 5b, 5c, 5d) hergestellt werden, als Schwalbenschwanz-, L-förmige, T-förmige, Kugel-, Kugelführungs- und/oder Teflonkeilverbindungen ausgebildet sind.

3. Vorrichtung nach Anspruch 1 oder 2, **dadurch gekennzeichnet, dass** die Gleitverbindungen, insbesondere diejenigen, die zwischen zwei ersten Blöcken (3a, 3b, 3c, 3d) hergestellt werden, und/oder diejenigen, die zwischen den zweiten Blöcken (4a, 4b, 4c, 4d) und den dritten Blöcken (5a, 5b, 5c, 5d) hergestellt werden, unterschiedlich in der Anzahl sind, wobei die Gleitverbindungen insbesondere zwischen zwei Blöcken, die sie miteinander verbinden, in ihrer Anzahl variieren.

4. Vorrichtung nach Anspruch 1 oder 2, **dadurch gekennzeichnet, dass** die Gleitverbindungen, die zwischen den zweiten Blöcken (4a, 4b, 4c, 4d) und den dritten Blöcke (5a, 5b, 5c, 5d) hergestellt werden, das Verschachteln eines zweiten Blocks (4a, 4b, 4c, 4d) in einem dritten Block (5a, 5b, 5c, 5d), oder umgekehrt, insbesondere durch ineinanderschiebbare, beispielsweise zylindrische, Formen umfasst.

5. Vorrichtung nach Anspruch 1 oder 2, **dadurch gekennzeichnet, dass** die Gleitverbindungen, die zwischen den zweiten Blöcken (4a, 4b, 4c, 4d) und den dritten Blöcken (5a, 5b, 5c, 5d) hergestellt werden, das Verschieben der zweiten Blöcke (4a, 4b, 4c, 4d) zu den dritten Blöcken (5a, 5b, 5c, 5d) in zueinander versetzten Ebenen umfassen.

6. Vorrichtung nach einem der vorhergehenden Ansprüche, **dadurch gekennzeichnet, dass** die ersten Blöcke (3a, 3b, 3c, 3d), die zweiten Blöcke (4a, 4b, 4c) und/oder die dritten Blöcke (5a, 5b, 5c, 5d) gleich groß, insbesondere gleich lang, sind.

7. Vorrichtung nach einem der Ansprüche 1 bis 5, **dadurch gekennzeichnet, dass** die ersten Blöcke (3a, 3b, 3c, 3d), die zweiten Blöcke (4a, 4b, 4c) und/oder die dritten Blöcken (5a, 5b, 5c, 5d) von unterschiedlicher Größe, insbesondere von unterschiedlicher Länge, sind.

8. Vorrichtung nach Anspruch 7, **dadurch gekennzeichnet, dass** zwei erste Blöcke (3a, 3b, 3c, 3d), zwei zweite Blöcke (4a, 4b, 4c, 4d) und/oder zwei dritte Blöcke (5a, 5b, 5c, 5d), die einander gegenüberliegend angeordnet sind, gleich groß, insbesondere gleich lang, sind.

9. Baugruppe, **dadurch gekennzeichnet, dass** sie Folgendes aufweist:
- eine Vorrichtung (1) nach einem der vorhergehenden Ansprüche,
- ein Objekt (2), das von der Vorrichtung (1) gehalten und/oder gestützt wird.

10. Baugruppe nach Anspruch 9, **dadurch gekennzeichnet, dass** sie Räder (10) zum Bewegen der Vorrichtung (1) und/oder Füße (12) zum Anheben der Vorrichtung (1) aufweist.

11. Baugruppe nach Anspruch 9 oder 10, **dadurch gekennzeichnet, dass** sie Trägerarme (11) und/oder eine Trägerplatte (13) des Objekts (2) aufweist.

12. Baugruppe nach einem der Ansprüche 9 bis 11, **dadurch gekennzeichnet, dass** sie Verschiebemittel (15) mindestens eines Teils der zweiten Blöcke (4a, 4b, 4c, 4d) und/oder dritten Blöcke (5a, 5b, 5c, 5d) aufweist, insbesondere pneumatische oder elektrische Zylinder.

13. Baugruppe nach einem der Ansprüche 9 bis 12, **dadurch gekennzeichnet, dass** sie einen äußeren Rahmen (16) mit einer Abmessung aufweist, die im Wesentlichen gleich dem maximalen Platzbedarf der Vorrichtung (1) in ihrer sogenannten vollständig geschlossenen Position ist.

## Claims

1. Device (1) for holding and/or supporting an object (2), the device (1) being adjustable by displacement along the first axis (X) and the second axis (Y) **within a single plane (Pz)** perpendicular to the third axis (Z) of a three-dimensional reference frame with three axes (X, Y, Z), the device (1) comprising:
- four first blocks (3a, 3b, 3c, 3d) arranged with each other so as to define a space of substantially parallelepiped shape rectangle at the center (C) of the device (1) and each comprising a first end (e1₃ₐ, e1_{3b}, e1_{3c}, e1_{3d}) connected to one of the first four blocks (3a, 3b, 3c, 3d) via a slide connection so that the first four blocks (3a, 3b, 3c, 3d) are connected to each other two to two by means of slide connections, each first block (3a, 3b, 3c, 3d) comprising an inner face (3i), an outer face (3e), opposite to the inner face (3i), a first side face (3l₁) and a second side face (3l₂), opposite to the first side face (3l₁), each slide connection formed between two first blocks (3a, 3b, 3c, 3d) being made between the inner face (3i) of one of the first two blocks and one of the first (3l₁) and second (3l₂) side faces of the other of the first two blocks, **characterized in that** the device comprises:
- four second blocks (4a, 4b, 4c, 4d), each second block (4a, 4b, 4c, 4d) comprising a first end (e1₄ₐ, e1_{4b}, e1₄ₑ, e1_{4d}) secured to a second end (e2₃ₐ, e2_{3b}, e2_{3c}, e2_{3d}) of each first block (3a, 3b, 3c, 3d), each second block (4a, 4b, 4c, 4d) extending from each second end (e2₃ₐ, e2_{3b}, e2_{3c}, e2_{3d}) of each first block (3a, 3b, 3c, 3d) in a same direction of rotation (R) about the center (C) of the device (1),
- four third blocks (5a, 5b, 5c, 5d), each third block (5a, 5b, 5c, 5d) comprising a first end (e1₅ₐ, e1_{5b}, e1_{5c}, e1_{5d}) secured to a second end (e2₄ₐ, e2_{4b}, e2_{4c}, e2_{4d}) of each second block (4a, 4b, 4c, 4d), every third block (5a, 5b, 5c, 5d) extending from each second end (e2₄ₐ, e2_{4b}, e2_{4c}, e2_{4d}) of each second block (4a, 4b, 4c, 4d) in a same direction of rotation (R) about the center (C) of the device (1), and a second end (e2₅ₐ, e2_{5b}, e2_{5c}, e2_{5d}) connected to one of the four second blocks (4a, 4b, 4c, 4d) via a slide connection so that the four pairs formed each of a second block (4a, 4b, 4c, 4d) and a third block (5a, 5b, 5c, 5d) are connected to each other two to two by means of slide connections,
the first (3a, 3b, 3c, 3d), second (4a, 4b, 4c, 4d) and third (5a, 5b, 5c, 5d) blocks being contained in the same plane (Pz) perpendicular to the third axis (Z) and movable along the first axis (X) and the second axis (Y) to modify the bulk of the device (1) in order to allow holding and/or supporting the object (2).

2. Device according to claim 1, **characterized in that** the slide connections, in particular those established between two first blocks (3a, 3b, 3c, 3d) and/or those established between the second blocks (4a, 4b, 4c, 4d) and the third blocks (5a, 5b, 5c, 5d), are dovetail type, "L"-, "T"-, "ball"-shaped, ball rail type and/or Teflon shim type.

3. Device according to claim 1 or 2, **characterized in that** the slide connections, in particular those established between two first blocks (3a, 3b, 3c, 3d) and/or those established between the second blocks (4a, 4b, 4c, 4d) and the third blocks (5a, 5b, 5c, 5d), are different in numbers, the slide connections especially being in variable numbers between two blocks that they connect to each other.

4. Device according to claim 1 or 2, **characterized in that** the slide connections established between the second blocks (4a, 4b, 4c, 4d) and the third blocks (5a, 5b, 5c, 5d) comprise nesting a second block (4a, 4b, 4c, 4d) in a third block (5a, 5b, 5c, 5d), or vice versa, especially by means of shapes sliding in one another, particularly cylindrical shapes.

5. Device according to claim 1 or 2, **characterized in that** the slide connections established between the second blocks (4a, 4b, 4c, 4d) and the third blocks (5a, 5b, 5c, 5d) comprise sliding the second blocks (4a, 4b, 4c, 4d) with respect to the third blocks (5a, 5b, 5c, 5d) in planes offset from one another.

6. Device according to any one of the preceding claims, **characterized in that** the first blocks (3a, 3b, 3c, 3d), the second blocks (4a, 4b, 4c) and/or the third blocks (5a, 5b, 5c, 5d) are of the same size, in particular of the same length.

7. Device according to any one of claims 1 to 5, **characterized in that** the first blocks (3a, 3b, 3c, 3d), the second blocks (4a, 4b, 4c) and/or the third blocks (5a, 5b, 5c, 5d) are of different sizes, in particular of different lengths.

8. Device according to claim 7, **characterized in that** two first blocks (3a, 3b, 3c, 3d), two second blocks (4a, 4b, 4c, 4d) and/or two third blocks (5a, 5b, 5c, 5d), located oppositely, facing each other, are of the same size, in particular of the same length.

9. Assembly, **characterized in that** it comprises:
- a device (1) according to any of the preceding claims,
- an object (2) held and/or supported by the device (1).

10. Assembly according to claim 9, **characterized in that** it comprises wheels (10) to make it possible to move the device (1) and/or feet (12) to make it possible to raise the device (1).

11. Assembly according to claim 9 or 10, **characterized in that** it comprises support arms (11) and/or a support plate (13) for the object (2).

12. Assembly according to one of claims 9 to 11, **characterized in that** it comprises means (15) for moving at least part of the second blocks (4a, 4b, 4c, 4d) and/or third blocks (5a, 5b, 5c, 5d), in particular pneumatic or electric cylinders.

13. Assembly according to any one of claims 9 to 12, **characterized in that** it comprises an outer frame (16) with a dimension substantially equal to the maximum bulk of the device (1) in its so-called total closure position.
